# EUROPÄISCHE PATENTANMELDUNG

(11) **EP 1 241 570 A2**
(43) Veröffentlichungstag der Anmeldung: **18.09.2002**
(21) Anmeldenummer: 02003910.3
(22) Anmeldetag: 21.02.2002
(51) Int. Cl.: G06F 9/445, G06F 9/44

(54) **Automatisierte Versions-Analyse von zu einer Softwareapplikation gehörenden Softwarekomponenten**

(30) Priorität: 07.03.2001 DE 10110949
(71) Anmelder: SIEMENS AKTIENGESELLSCHAFT, 80333 München (DE)
(72) Erfinder: Doll, Stephan, 45257 Essen (DE); Jaeger, Robert, 59757 Arnsberg (DE)

(57) **Zusammenfassung**

Zur automatisierten Versions-Analyse einer Softwareapplikation wird bereits bei der Installation der Softwareapplikation (3) auf einer Datenverarbeitungsanlage (1) durch ein Setup-Programm unter anderem die Versionsinformation (6) der jeweiligen Softwarekomponenten (2) in eine Referenzliste (4) eingetragen. Diese Referenzliste (4) wird in Form einer Datei in einem Speicher (9) oder in einer Konfigurationsdatenbank der Datenverarbeitungsanlage (1) gespeichert. Bei einer nachträglichen ordnungsgemäßen Aktualisierung der Softwareapplikation (3) wird automatisch die der Softwareapplikation (3) zugehörige Referenzliste (4) aktualisiert. Das Verfahren zur automatischen Versions-Analyse bezüglich der auf der Datenverarbeitungsanlage (1) installierten Softwareapplikation (3) vergleicht nach Erstellen einer Referenzliste (4) die Versionsinformation (6,11) der tatsächlich auf der Datenverarbeitungsanlage (1) vorliegenden Softwarekomponenten (2,7,10) mit den jeweiligen Versionsinformationen in der Referenzliste (4). Die sich durch das Vergleichen ergebenden Vergleichsinformationen (Unterschiede bzw. Übereinstimmungen) werden in eine Vergleichsliste (12) geschrieben.

## Beschreibung

Die Erfindung betrifft ein Verfahren zum Überprüfen von zumindest einer auf einer Datenverarbeitungsanlage installierten Softwareapplikation gemäß dem Oberbegriff des Anspruchs 1, sowie zugehörig ein Computerprogramm-Produkt und einen computerlesbaren Datenträger.

Eine Softwareapplikation besteht in der Regel aus mehreren Softwarekomponenten. Jede Softwarekomponente kann wiederum aus einer oder mehreren Dateien bestehen, die unterschiedlichen Typs sein können und in unterschiedlichen Speicherbereichen einer Datenverarbeitungsanlage abgelegt sein können. Diese Komponenten verfügen üblicherweise über eine eigene Versionsinformation, die wiederum aus unterschiedlichen Teilen bestehen kann, beispielsweise einem Datum der erstmaligen Kompilierung, einer Versionsinformation der Art "2.0" (oder "1.1.2" usw.), etc..

Aus der US 5,577,232 ist bereits ein Verfahren und eine Vorrichtung zur Steuerung des Zusammenwirkens von Computer-Hardware und zugeordneter Software-Applikation bei unterschiedlichen Versionen von Software und Hardware bekannt. Dabei werden in der Hardware nur solche Schaltkreise und Funktionen aktiviert, also nutzbar geschaltet, für die die jeweilige Version der Software in ihrer vorgesehen ist. Umgekehrt werden in der installierten Software nur die Teile nutzbar geschaltet, für die die korrespondierenden Schaltkreise und Funktionen in der vorliegenden Hardware-Version vorhanden sind. Dazu sind in der Hardware Informationen über die benötigte Software-Version abgelegt 3. Eine Vergleichseinrichtung liest die Versions-Information der Hardware aus einem nichtflüchtigen Speicher aus und vergleicht diese mit der Versions-Information der Software-Applikation. Falls die Hardware-Version "älter" als die Software-Version ist und damit einen geringeren Funktionsumfang hat, spricht die Software-Applikation nur solche Hardware-Funktionen und Schaltkreise an, die in der "älteren" Hardware-Version realisiert sind. Die in der "älteren" Hardware noch nicht realisierten Funktionen werden durch die Software emuliert. Dazu weist die Software eine Historie der verschiedenen Hardware-Versionen auf. Umgekehrt umfasst die Hardware einen Schaltungsteil zum Abschalten solcher Schaltkreise, die von den Software-Komponenten einer verwendeten "älteren" Software-Version noch nicht berücksichtigt sind.

Weiter ist aus der US 6,009,401 eine Vorrichtung zur Distribution von Software-Applikationen in einem Netzwerk, beispielsweise dem Internet, bekannt. Beim Erwerb einer Software-Lizenz durch einen Kunden wird in einer zentralen Instanz ("License Clearing-House") die Versions-Information der erworbenen Software-Applikation gespeichert. Der Kunde kann danach die so lizenzierte Software-Applikation erstmalig von einem Server im Netzwerk ("publisher site") herunterladen. Bei einer erneuten Anforderung der Übertragung, beispielsweise wenn der Kunde die Software-Applikation auf einer neuen Hardware benutzen möchte, vergleicht eine Kontrollinstanz ("Relicensing Manager") die Versions-Information der erneut angeforderten Software-Applikation mit der lizenzierten Versions-Information und gibt den Übertragungs-Vorgang nur frei, wenn die Version der erneut angeforderten Software-Applikation älter oder gleich der lizenzierten Version ist.

Ferner ist aus der JP 10-027095 A ein Verfahren zum automatischen Herunterladen einer Software-Applikation in der jeweils aktuellsten Version bekannt. Dazu fordert eine auf einem PC installierte Software-Applikation bei jedem Start von einem Server die Versions-Information der dort bereitliegenden aktuellsten Version dieser Software-Applikation an. Diese Versions-Information wird von einer auf dem PC installierten Vergleichseinrichtung ("Discriminating Part") mit der eigenen Versions-Information verglichen. Falls die auf dem Server gespeicherte Version der Software-Applikation jünger ist als die soeben gestartete Version, wird diese vom Server zum PC übertragen, wo die vorhandene, ältere Version überschrieben wird.

Bei den bekannten Verfahren hat es sich als nachteilig erwiesen, dass der Betrieb von Software-Applikationen, die aus mehreren Software-Komponenten bestehen, gestört sein kann, und zwar häufig nach der Installation von weiteren Software-Komponenten.

So können bei der Ausführung einer Softwareapplikation Fehler auftreten, wenn bestimmte der Softwareapplikation zugeordnete Softwarekomponenten oder Dateien, auf welche die Softwareapplikation zugreift, nicht ordnungsgemäß durch ein Installations- oder Setupprogramm bzw. ein Update-Programm auf der Datenverarbeitungsanlage installiert wurden. Zur Fehleranalyse und Behebung werden daher üblicherweise die Versionsinformationen der zu der fehlerbehafteten Softwareapplikation zugehörigen Softwarekomponenten bzw. Dateien überprüft. Hierzu muss ermittelt werden, welche Version der einzelnen Softwarekomponente bzw. Datei auf der Datenverarbeitungsanlage installiert ist. Auf diese Weise kann beispielsweise ermittelt werden, ob die zu einer Softwareapplikation gehörenden Softwarekomponenten bzw. Dateien alle einer bestimmten Version entsprechen.

Gemäß dem Stand der Technik muss dazu jede Softwarekomponente bzw. Datei separat gesucht, aufgerufen und geprüft werden. Eine solche Abfrage kann beispielsweise über die Komponenteneigenschaft oder über eine sogenannte "Info About" erfolgen. Dies ist offensichtlich umständlich und sehr zeitaufwendig.

Aufgabe der Erfindung ist es, einen zuverlässigen Betrieb auch von mehrere Softwarekomponenten aufweisenden Software-Applikationen zu gewährleisten.

Die Lösung dieser Aufgabe ist durch die im Anspruch 1 angegebenen Merkmale gegeben. Durch die kennzeichnenden Merkmale der Unteransprüche ist das Verfahren in vorteilhafter Weise weiter ausgestaltet.

Die Lösung sieht vor, dass, dass im Zuge der Installation eine Referenzliste erstellt wird, welche die Versionsinformationen von installierten Softwarekomponenten umfasst, dass zur Überprüfung die aktuellen Versionsinformationen von den installierten Softwarekomponenten ermittelt werden, die ermittelten Versionsinformationen mit den in der Referenzliste gespeicherten verglichen werden und als Ergebnis die Unterschiede und/oder Übereinstimmungen zwischen den aktuellen Versionsinformationen und den in der Referenzliste verzeichneten zur Verfügung gestellt werden. Dadurch können inkonsistente Installationen, bei denen es zur zumindest teilweisen Vermischung von Software-Komponenten von verschiedenen Applikations-Versionen kommen kann, erkannt werden. Anhand der Referenzliste werden bei einer NeuInstallation oder bei der Nach-Installation einer neuen Software-Version nur solche Software-Komponenten installiert, die noch nicht in der richtigen Version vorhanden sind. Die Versionsüberprüfung von einer Softwareapplikation zugeordneten Softwarekomponenten bzw. Dateien und damit die Fehlersuche bei gestörten Software-Applikationen wird vereinfacht und der Aufwand bei der Installation neuer Software-Versionen, z.B. sog. "Updates", wird minimiert.

Das Schreiben der Referenzliste kann insbesondere im Zuge der Installation der Softwareapplikation auf der Datenverarbeitungsanlage erfolgen.

In einem sogenannten Kopfbereich - in der Literatur häufig als 'Header' bezeichnet - der Referenzliste werden allgemeine Informationen, insbesondere die Versionsinformation der Softwareapplikation sowie weitere Informationen zu den jeweiligen Softwarekomponenten bzw. Dateien hinterlegt.

Bei einer nachträglichen ordnungsgemäßen Aktualisierung der Softwareapplikation - beispielsweise durch ein vom Hersteller der Softwareapplikation erstelltes Update-Programm - werden Softwarekomponenten oder Dateien geändert, hinzugefügt, gelöscht oder ausgetauscht. Gemäß einer Weiterbildung der Erfindung wird einer Aktualisierung durch eine entsprechende automatische Aktualisierung der zu der Softwareapplikation gehörigen Referenzliste Rechnung getragen.

Erfindungsgemäß wird weiterhin ein Verfahren zur automatischen Versions-Analyse bezüglich der auf der Datenverarbeitungsanlage installierten Softwareapplikation vorgeschlagen, bei dem nach Erstellen der Referenzliste-gemäß dem oben beschriebenem Verfahren - die Versionsinformationen der tatsächlich auf der Datenverarbeitungsanlage installierten Softwarekomponenten bzw. Dateien (die bspw. bei einem nicht-ordnungsgemäßen Installieren neuer Komponenten nicht mit denen in der Referenzliste übereinstimmen) mit der Versionsinformationen in der Referenzliste verglichen werden. Die sich durch das Vergleichen ergebenden Vergleichsinformationen - Unterschiede bzw. Übereinstimmungen - werden in eine Vergleichsliste geschrieben.

Gemäß einer Weiterbildung der Erfindung werden die im Zuge des Vergleichs ermittelte Übereinstimmungen in einen ersten Teil der Vergleichsliste und die im Zuge des Vergleichs ermittelten Abweichungen in einen zweiten Teil der Vergleichsliste geschrieben.

Sowohl die Referenzliste als auch die Vergleichsliste können auf einem computerlesbaren Datenträger gespeichert werden.

Des weiteren werden erfindungsgemäß Computerprogramm-Produkte vorgeschlagen, die in Fällen, in denen sie in einen Speicher einer Datenverarbeitungsanlage geladen werden, die oben beschriebenen Verfahren ausführen.

Weitere Vorteile, Merkmale und Eigenschaften der vorliegenden Erfindung werden anhand von Ausführungsbeispielen bezugnehmend auf die begleitenden Zeichnungen näher erläutert.

Dabei zeigen:
- Fig. 1:: eine erfindungsgemäße Referenzliste unmittelbar nach Installation einer Softwareapplikation,
- Fig. 2:: die Referenzliste nach einer ordnungsgemäßen Aktualisierung (Update) der Softwareapplikation,
- Fig. 3:: eine schematische Darstellung einer Datenverarbeitungsanlage, in dessen Speicher eine Applikation, eine Referenzliste sowie Softwarekomponenten unterschiedlicher Versionen abgelegt sind,
- Fig. 4:: eine von einem Versionsabfrageprogramm erstellte Vergleichsliste, und
- Fig. 5:: ein Ablaufdiagramm zur Veranschaulichung der bei einer erfindungsgemäßen Versions-Analyse ablaufenden wesentlichen Verfahrensschritte.

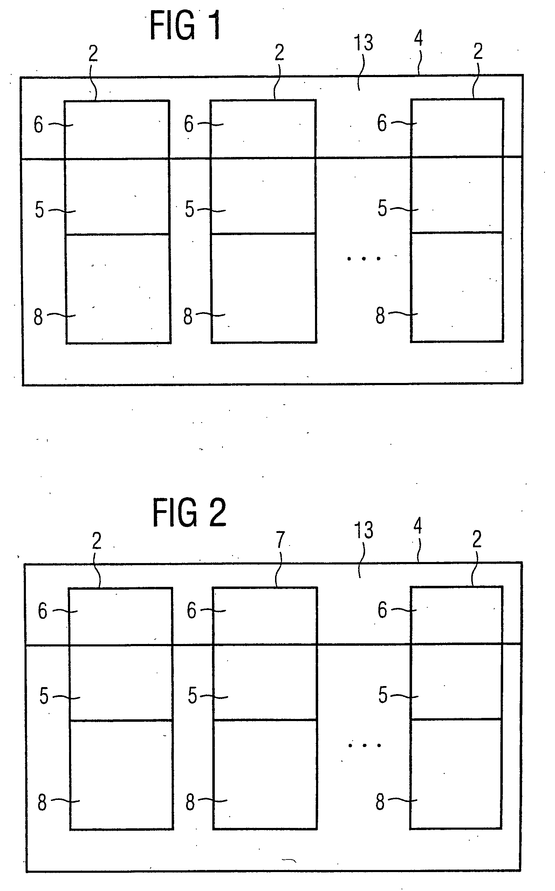

In Fig. 1 ist eine Referenzliste 4 dargestellt, die erfindungsgemäß unmittelbar nach Installation einer Softwareapplikation auf einer - nicht dargestellten-Datenverarbeitungsanlage, z.B. einem 'Personal Computer' oder einer 'Workstation'-, angelegt wird. Bei der Installation der Softwareapplikation werden Versionsinformationen von allen zu der Softwareapplikation gehörenden Softwarekomponenten bzw. Dateien, sowie ggf. Versionsinformation der Softwareapplikation selbst in diese Referenzliste 4 geschrieben.

Dies kann bspw. wie folgt aussehen:
- Produkt:: HiPath
- Komponente:: Waccount
- Dateien:: xyz.exe, xyz.dll

In der Referenzliste 4 ist eine Versionsinformation 6 und optional ein Speicherort 5 sowie eine Kennung 8 der jeweiligen Softwarekomponenten bzw. Dateien 2 abgelegt. Die Referenzliste 4 hat einen Kopfbereich 13 in dem speziell die Versionsinformation 6 der Softwareapplikation selbst gespeichert wird.

Fig. 2 zeigt einen Zustand der Referenzliste 4, wie er nach einer nachträglichen ordnungsgemäß vorgenommenen Aktualisierung der Softwareapplikation - in der Literatur häufig als 'Update' bezeichnet - entstanden ist. Dabei wurden zumindest einige der Softwarekomponenten bzw. Dateien aktualisiert. Diese Aktualisierung wurde in die Referenzliste 4 eingetragen, indem die Versionsinformation der betroffenen Softwarekomponenten bzw. Dateien 7 aktualisiert wurde.

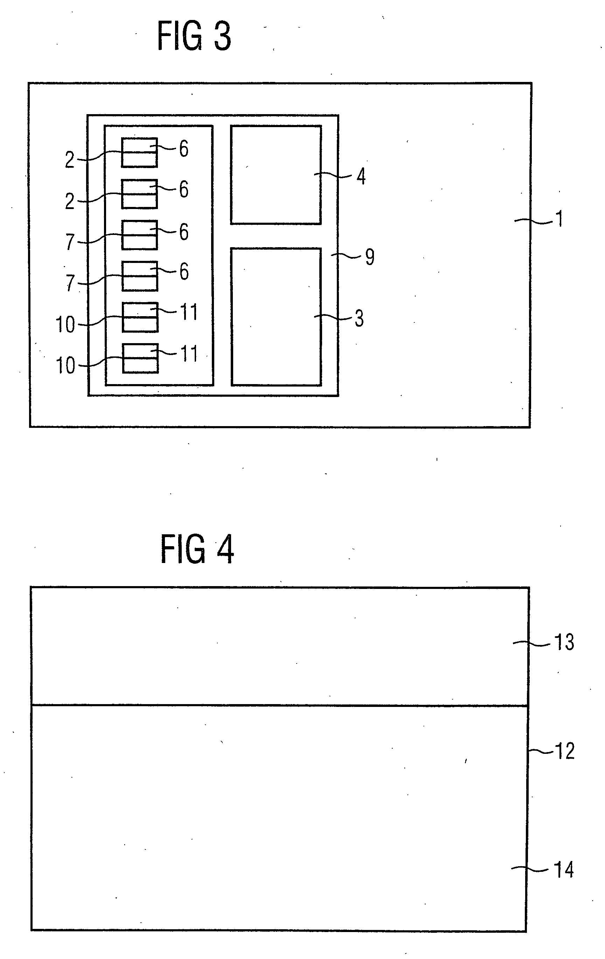

In Fig. 3 ist die Situation nach einer nicht ordnungsgemäßen Aktualisierung der Softwareapplikation 3 dargestellt. Eine nicht ordnungsgemäße Aktualisierung einer Softwareapplikation liegt beispielsweise vor, wenn einzelne Softwarekomponenten bzw. Dateien ausgetauscht wurden. Dabei erfolgt im Gegensatz zu der ordnungsgemäßen Aktualisierung mit einem Update-Programm keine entsprechende Aktualisierung der Referenzliste 4. Aus diesem Grund existieren in einem Speicher 9 der Datenverarbeitungsanlage 1 neben den ursprünglich installierten Softwarekomponenten bzw. Dateien 2 und den ordnungsgemäß aktualisierten Softwarekomponenten bzw. Dateien 7 Softwarekomponenten bzw. Dateien 10, deren Versionsinformation 11 nicht mit der Referenzliste 4 übereinstimmen.

Im folgenden soll beschrieben werden, wie eine gemäß dem vorstehend beschriebenen Verfahren erstellte Referenzliste 4 bei der Analyse und Behebung von Fehlern bei der Ausführung einer Softwareapplikation 3 auf einer Datenverarbeitungsanlage 1 verwendet werden kann.

Zur Fehleranalyse wird eine automatische Versions-Analyse ausgeführt, deren Ergebnis eine Vergleichsliste 12 gemäß Fig. 4 ist. Bei der automatischen Versions-Analyse werden die Versionsinformationen aller zur Softwareapplikation 3 gehörigen, tatsächlich auf der Datenverarbeitungsanlage 1 vorliegenden Softwarekomponenten bzw. Dateien 2, 7, 10 mit Versionsinformationen in der Referenzliste 4 verglichen. Auf Grundlage diese Vergleichs wird die Vergleichsliste 12 angelegt und ggf. dem Benutzer angezeigt.

Die Vergleichsliste 12 ist wie folgt aufgebaut: In einem Kopfteil 13 der Vergleichsliste 12 erscheinen Informationen bezüglich derjenigen tatsächlich auf der Datenverarbeitungsanlage 1 vorliegenden Softwarekomponenten bzw. Dateien 2 und 7, deren Versionsinformationen mit der Referenzliste 4 übereinstimmen.

Die Versionsinformation 11 bezüglich der tatsächlich auf der Datenverarbeitungsanlage vorliegenden Softwarekomponenten bzw. Dateien 10, deren Versionsinformation nicht der Referenzliste 4 entspricht, wird in einer sogenannten Differenzliste 14 eingetragen und/oder angezeigt, die Teil der Vergleichsliste 12 ist.

Änderungen von Softwarekomponenten bzw. Dateien, die durch einfaches Kopieren oder Austauschen durchgeführt wurden, können somit über die Differenzliste 14 erfasst werden.

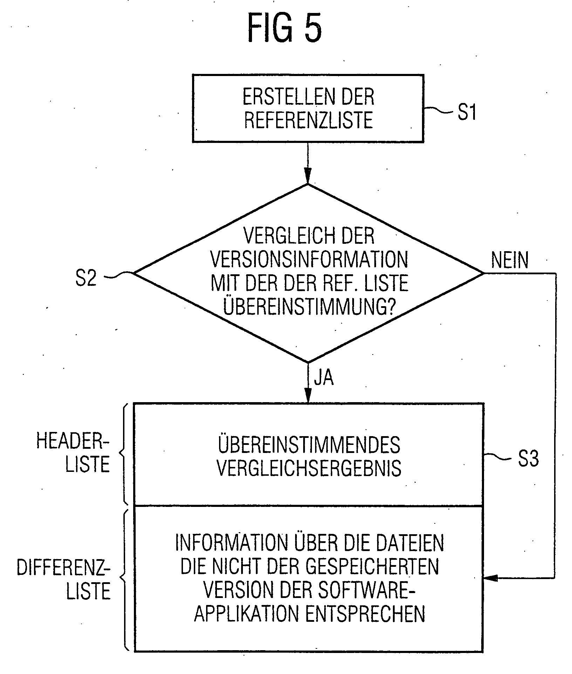

Bezugnehmend auf Fig. 5 soll nunmehr das erfindungsgemäße Verfahren anhand eines Ablaufdiagramms veranschaulicht werden:
In einem ersten Schritt S-1 werden Informationen zu allen zu einer Softwareapplikation gehörenden Softwarekomponenten bzw. Dateien wie beispielsweise der Speicherort, die Kennung, sowie die Versionsinformation in eine Referenzliste eingetragen. Diese Referenzliste kann sowohl als Datei - und damit als Bestandteil der Softwareapplikation selbst-vorliegen, als auch an geeigneter Stelle in einem Speicher oder in einer Konfigurationsdatenbank der Datenverarbeitungsanlage abgelegt werden.
In einem zweiten Schritt S-2 erfolgt der Vergleich der Versionsinformation der tatsächlich auf der Datenverarbeitungsanlage vorliegenden Softwarekomponenten bzw. Dateien mit der Versionsinformation in der Referenzliste. Um die tatsächlich auf der Datenverarbeitungsanlage vorliegenden Softwarekomponenten bzw. Dateien schneller auffinden zu können, kann auf die Speicherort-Information in der Referenzliste zugegriffen werden. Dies trifft natürlich nur zu, wenn die entsprechenden Softwarekomponenten bzw. Dateien ordnungsgemäß installiert oder aktualisiert wurden, da in der Regel nur dann der tatsächliche Speicherort mit dem in der Referenzliste angegebenen Speicherort der betreffenden Softwarekomponente bzw. Datei übereinstimmt.
In einem dritten Schritt S-3 wird auf Basis des Vergleichs von Schritt S-2 die Vergleichsliste erstellt. Dazu werden Informationen bezüglich der tatsächlichen Softwarekomponenten bzw. Dateien, deren Versionsinformation mit den Informationen in der Referenzliste übereinstimmt, in den Kopfbereich der Vergleichsliste und Informationen bezüglich derjenigen tatsächlich auf der Datenverarbeitungsanlage vorliegenden Softwarekomponenten bzw. Dateien, deren Versionsinformation nicht mit der entsprechenden Information in der Referenzliste und insbesondere nicht mit der Versionsinformation bezüglich der Softwareapplikation in der Referenzliste übereinstimmt, in die Differenzliste der Vergleichsliste eingetragen. Die Vergleichsliste wird dem Benutzer in Form einer Textdatei zur Verfügung gestellt; selbstverständlich ist auch ein Ausdruck oder eine Übertragung der Vergleichsliste per E-Mail möglich, beispielsweise an einen nicht am Standort der Datenverarbeitungsanlage ansässigen Administrator.

Abschließend kann ein Benutzer, der eine Fehleranalyse oder Fehlerbehebung bei einer Softwareapplikation auf der Datenverarbeitungsanlage ausführen möchte, aus der Vergleichsliste ersehen, welche Komponenten bzw. Dateien der Softwareapplikation hinsichtlich ihrer Version mit der Softwareapplikation übereinstimmen bzw. nicht übereinstimmen. Die nicht übereinstimmenden Softwarekomponenten bzw. Dateien können ein hohes Fehlerpotential haben, so dass bereits durch Austauschen der nicht übereinstimmenden Softwarekomponenten bzw. Dateien ein auftretender Fehler behoben werden kann. Das Austauschen kann auch automatisiert durch ein Installationsoder Wartungsprogramm erfolgen, welches dazu aus der als Datei gespeicherten Vergleichsliste die Namen, Speicherorte und Versionsinformationen der neu zu installierenden Softwarekomponenten ausliest.

Es können also in einfacher Weise und automatisiert die Versionen aller zu einer Softwareapplikation gehörenden Softwarekomponenten bzw. Dateien ermittelt und dem Benutzer angezeigt werden. Weiter ist auch eine selbsttätige Auswertung dieser Informationen durch ein Computerprogramm und damit eine automatisierte "Reparatur" einer fehlerbehafteten Installation der Softwareapplikation möglich.

## Patentansprüche

1. Verfahren zum Überprüfen von zumindest einer auf einer Datenverarbeitungsanlage (1) installierten Softwareapplikation (3), die mindestens eine Softwarekomponente (2) aufweist,
wobei bei der Installation der Softwareapplikation (3) zumindest eine Versionsinformation (6,11) gespeichert wird,
**dadurch gekennzeichnet,**
- **dass** im Zuge der Installation eine Referenzliste (4) erstellt wird, welche die Versionsinformationen (6,11) von installierten Softwarekomponenten (2) umfasst,
- **dass** zur Überprüfung
- - die aktuellen Versionsinformationen (6,11) von den installierten Softwarekomponenten (2,7,10) ermittelt werden,
- - die ermittelten Versionsinformationen (6,11) mit den in der Referenzliste (4) gespeicherten verglichen werden und
- - als Ergebnis die Unterschiede und/oder Übereinstimmungen zwischen den aktuellen Versionsinformationen (6,11) und den in der Referenzliste verzeichneten zur Verfügung gestellt werden.

2. Verfahren nach Anspruch 1,
**dadurch gekennzeichnet,**
**dass** die Referenzliste (4) im Zuge der Installation der Softwareapplikation (3) auf der Datenverarbeitungsanlage (1) gespeichert wird.

3. Verfahren nach einem der vorhergehenden Ansprüche,
**dadurch gekennzeichnet,**
**dass** in der Referenzliste (4) zu eingetragenen Softwarekomponenten (2) deren jeweiliger Speicherort (5) auf der Datenverarbeitungsanlage (1) eingetragen wird.

4. Verfahren nach einem der vorhergehenden Ansprüche,
**dadurch gekennzeichnet,**
**dass** bei einer nachträglichen ordnungsgemäßen Aktualisierung von Softwarekomponenten (7) automatisch auch die Referenzliste (4) bezüglich der aktualisierten Softwarekomponenten (7) entsprechend aktualisiert wird.

5. Verfahren nach einem der vorhergehenden Ansprüche,
**dadurch gekennzeichnet,**
**dass** das Ergebnis der Überprüfung als Vergleichsinformation in eine Vergleichsliste (12) geschrieben wird.

6. Verfahren nach Anspruch 5,
**dadurch gekennzeichnet,**
**dass** im Zuge der Überprüfung ermittelte Übereinstimmungen in einen ersten Teil der Vergleichsliste (12) und im Zuge des Vergleichs ermittelte Abweichungen in einen zweiten Teil der Vergleichsliste (12) geschrieben werden.

7. Verfahren nach einem der vorhergehenden Ansprüche,
**dadurch gekennzeichnet,**
**dass** das Ergebnis der Überprüfung zur Aktualisierung von Softwarekomponenten (7) und/oder zur Wiederherstellung der ordnungsgemäßen Installation der Softwareapplikation (3) verwendet wird.

8. Computerprogramm-Produkt,
das in Fällen, in denen es in einen Speicher (9) einer Datenverarbeitungsanlage (1) geladen wird, ein Verfahren nach einem der Ansprüche 1 bis 7 ausführt.

9. Computerlesbarer Datenträger,
**dadurch gekennzeichnet,**
**dass** der Datenträger eine Vergleichsliste (12) aufweist, die durch ein Verfahren nach einem der Ansprüche 1 bis 7 erzeugt wird.
